# EUROPÄISCHE PATENTSCHRIFT

(11) **EP 0 974 714 B1**
(45) Veröffentlichungstag und Bekanntmachung des Hinweises auf die Patenterteilung: **21.09.2005**
(21) Anmeldenummer: 99112898.4
(22) Anmeldetag: 03.07.1999
(51) Int. Cl.: E04F 15/08, E04F 13/14, B32B 17/06, B44C 5/04, B44F 1/02, B44F 1/04, B44F 7/00

(54) **Dekorfliese für eine Wand-, Boden- und/oder Deckenbekleidung**
Decorative tile for covering walls, floors and/or ceilings
Carreau décoratif pour revêtir le sol, le mur et/ou le plafond

(30) Priorität: 23.07.1998 DE 29813018 U
(43) Veröffentlichungstag der Anmeldung: 26.01.2000
(73) Patentinhaber: Böe, Hans Peter, 46049 Oberhausen (DE)
(72) Erfinder: Böe, Hans Peter, 46049 Oberhausen (DE)
(74) Vertreter: Sparing, Rolf Klaus

(56) Entgegenhaltungen:
- EP-A- 0 540 335
- DE-U- 9 402 364
- GB-A- 913 995
- GB-A- 2 245 223

## Beschreibung

Die Erfindung betrifft eine Dekorfliese für eine Wand-, Boden- und/oder Deckenbekleidung.

Aus der Praxis bekannte Dekorfliesen sind regelmäßig als Keramikfliesen ausgeführt, die das Dekor auf ihrer Vorder- bzw. Sichtseite aufweisen, weil das Keramikmaterial vollkommen lichtundurchlässig bzw. undurchsichtig ist. Das Dekor kann dem Betrachter folglich nur zweidimensional dargeboten werden.

Aus der GB 2 245 223 A ist bekannt, daß ein dreidimensionales Bild dadurch erzeugt wird, daß ein dreidimensionales Bild in zweidimensionale Ausschnitte geteilt und auf mehrere Scheiben aufgebracht wird und die so behandelten Scheiben zu einer Einheit mit hintereinander geschichteten Scheiben zusammengestellt wird, wobei beim Durchblick der Eindruck eines dreidimensionalen Bildes entsteht. Eine ähnliche Anordnung ist auch aus der GB 913 995 A ist eine Anordnung zur Betrachtung einer Bilddarstellung mittels reflektierten Lichtes bekannt. Die EP 0 540 335 A offenbart eine bedruckte dekorative Platte, deren Außenschicht aus vorder- oder rückseitig bedrucktem Glas besteht, das auf eine transparente Kunstharzschicht aufgebracht ist. Dadurch erhält die Platte eine transparente Außenschicht. Aus der DE 94 02 364 U ist eine Fliese aus einem mineralischen Werkstoff, wie keramischem Werkstoff oder Glas, mit einem Scherben bekannt, der eine Glasur und auf der Glasur ein erstes Muster aufweist. Die äußere Schicht wird durch eine Glasglasur gebildet, auf deren Ober- und Rückfläche unterschiedliche Muster gedruckt sind. Die Glasglasurschicht wird durch Brennen mittels Siebdrucktechnik aufgebrachter Glasurmasse erzeugt.

Der Erfindung liegt die Aufgabe zugrunde, mit einfachen Mitteln eine Dekorfliese mit einem deutlichen dreidimensionalem Dekoreffekt zu entwickeln.

Diese Aufgabe wird durch eine Dekorfliese mit den Merkmalen des Patentanspruchs 1 gelöst.

Die Erfindung geht hierbei von der Überlegung aus, daß die Betrachtung der rückwärtigen Dekorbedruckung durch das transparente Glasmaterial mit seinem gegenüber Luft anderen Brechungsindex insbesondere im Kantenbereich der Fliesen einen dreidimensionalen Effekt ergibt, der der Dekorfliese eine besondere, bisher unbekannte Ästhetik verleiht.

Für die weitere Ausgestaltung bestehen im Rahmen der Erfindung mehrere Möglichkeiten, deren bevorzugte nachfolgend hervorgehoben sind.

Bei der Verwendung von Floatglas in Form von Weißglas wird eine besonders klare Darstellung erreicht.

Die Dekorbedruckung kann unmittelbar auf die Rückseite der Glasscheibenanordnung und/oder auf eine Verbundglasfolie, die mit der Rückseite der Glasscheibenanordnung in Verbund gebracht ist, aufgedruckt sein. Verstärkt wird der beschriebene dreidimensionale Effekt, wenn die Glasscheibenanordnung auf der Fliesenvorderseite teilweise mit einer weiteren Dekorbedruckung bedruckt ist; hier kann nämlich der Betrachter über die unbedruckten Bereiche der Vorderseite durch die transparente Glasscheibenanordnung hindurch zumindest teilweise auch die rückseitige Dekorbeschichtung sehen, die zufolge des zwischenliegenden transparenten Glasmaterials je nach Betrachtungsrichtung mit zueinander variierendem Abstand von einander wahrgenommen wird; hinzu kommen Schatteneffekte. Zumindest die weitere Dekorbedruckung sollte eingebrannt sein, um die Dekorfliese gegenüber Abnutzung bzw. Dekorbeschädigung unempfindlich zu machen.

Eine nochmalige Verstärkung des dreidimensionalen Effektes erreicht man, wenn hinter der Glasscheibenanordnung zumindest eine mit der Glasscheibenanordnung in Verbund gebrachte, weitere transparente Glasscheibenanordnung zumindest mit rückseitiger Dekorbeschichtung angeordnet ist. Dabei versteht es sich von selbst, daß alle Dekorbedruckungen mit Ausnahme der an der Fliesenrückseite angeordneten Dekorbedruckung die Fliesenfläche nur teilweise bedecken dürfen, weil sonst die nach hinten folgenden Dekorbedruckungen nicht mehr sichtbar wären und zum dreidimensionalen Effekt nichts mehr beitragen würden.

Besondere zusätzliche Effekte ergeben sich noch, wenn die Dekorbedruckungen aus in der Gestaltung und insbesondere in der Lage identischen Positiv- und Negativbedruckungen bestehen. Mit anderen Worten sollen dann, wenn man die vorderseitige Dekorbedruckung als positiv bezeichnet, weitere positive Dekorbedruckungen oder deren Negative folgen. Vervielfacht werden die Effekte durch eine Verspiegelung der Fliesenrückseite, wobei die rückseitige Dekorbedruckung dann natürlich ebenfalls nicht vollflächig sein darf.

Die Glasscheibenanordnungen können jeweils aus einer Einzelscheibe, mehreren hintereinander angeordneten und miteinander in Verbund gebrachten Einzelscheiben und/oder einer Verbundglasscheibe mit zumindest einer Verbundglasfolie bestehen. Die Form der Dekorfliese ist zweckmäßigerweise rechteckig, insbesondere quadratisch; andere Formen sind aber ebenfalls möglich. Die Dekorbedruckungen können ohne weiteres unterschiedliche Farben aufweisen, auch mehrfarbig sein. Schließlich kann auch die Farbe des Fliesenklebers, mit dem die Dekorfliesen am Untergrund befestigt werden, in die Gestaltung mit einbezogen werden. Jedenfalls ergeben sich auch in Verbindung mit dem Einsatz mehrerer hintereinander angeordneter Glasscheiben unzählige Ausführungsvarianten.

Im folgenden wird die Erfindung anhand einer ein Ausführungsbeispiel darstellenden Zeichnung näher erläutert.

Es zeigen
- Fig. 1: einen Querschnitt durch eine erste Ausführungsform einer Dekorfliese,
- Fig. 2: einen Querschnitt durch eine zweite Ausführungsform einer Dekorfliese und
- Fig. 3: einen Querschnitt durch eine dritte Ausführungsform einer Dekorfliese.

Die in den Figuren dargestellten Dekorfliesen sind für eine Wand-, Boden- und/oder Deckenbekleidung vorgesehen und sind mit Hilfe eines geeigneten Klebers an dem betreffenden Untergrund anzukleben.

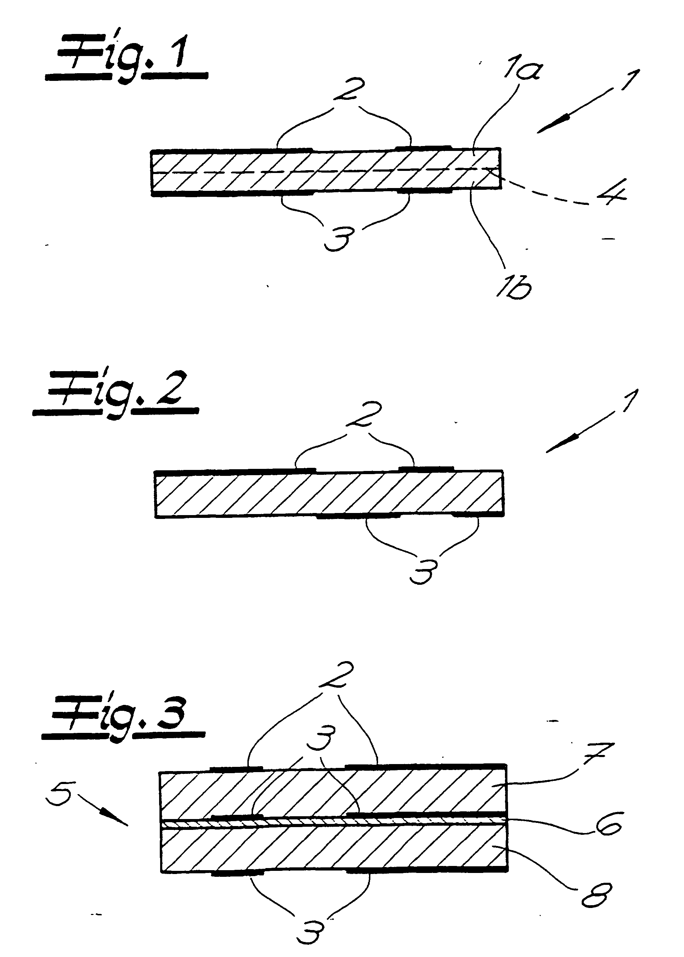

Die Dekorfliesen nach den Fig. 1 und 2 bestehen jeweils aus einer quadratischen transparenten Floatglaseinzelscheibe 1 aus Weißglas, die auf ihrer Vorderseite eine Dekorbedruckung 2 (als Positiv) aufweist, die sich nur über einen Teil der Vorderseite erstreckt; die übertrieben dick dargestellten schwarzen Bereiche sind bedruckte Bereiche, die an die schwarzen Bereiche anschließenden, gleichsam freigelassenen Bereiche sind unbedruckt. Auf der Rückseite weist die Floatglaseinzelscheibe 1 eine weitere Dekorbedruckung 3 auf, die entweder ebenfalls als Positiv (Fig. 1) oder als Negativ der vorderseitigen Dekorbedruckung 2 (Fig. 2) ausgeführt ist.

In Fig. 1 ist durch eine gestrichelte Linie 4 auch angedeutet, daß die Floatglasscheibe 1 auch aus zwei vorderseitig bedruckten und anschließend rückseitig in Verbund gebrachten Einzelscheiben 1a, 1b bestehen kann.

Die Ausführungsform nach Fig. 3 besteht aus einer Verbundglasscheibe 5 mit einer Verbundglasfolie 6 zwischen zwei Einzelscheibe 7, 8. Die Vorderseite der vorderen Einzelscheibe 7, die Vorderseite der Verbundglasfolie 6 und die Rückseite der hinteren Einzelscheibe 8 sind mit einer identischen Dekorbedruckung 2, 3 versehen.

## Patentansprüche

1. Dekorfliese für eine Wand-, Boden- und/oder Deckenbekleidung, **gekennzeichnet durch** eine die Fliesenvorderseite bildende transparente Glasscheibenanordnung (1,7), auf deren Rückseite eine Dekorbedruckung (3) angeordnet ist, wobei die Glasscheibenanordnung (1,7) aus Floatglas besteht.

2. Dekorfliese nach Anspruch 1, **dadurch gekennzeichnet, dass** die Glasscheibenanordnung (1,7) aus Floatglas in Form von Weißglas besteht.

3. Dekorfliese nach Anspruch 1 oder 2, **dadurch gekennzeichnet, dass** die Dekorbedruckung (3) auf die Rückseite der Glasscheibenanordnung (1,7) aufgedruckt ist.

4. Dekorfliese nach einem der Ansprüche 1 bis 2, **dadurch gekennzeichnet, dass** die Dekorbedruckung (3) auf eine Verbundglasfolie (5) aufgedruckt ist, die mit der Rückseite der Glasscheibenanordnung (7) in Verbund gebracht ist.

5. Dekorfliese nach einem der Ansprüche 1 bis 4, **dadurch gekennzeichnet, dass** die Glasscheibenanordnung (1,7) auf der Fliesenvorderseite teilweise mit einer weiteren Dekorbedruckung (2) bedruckt ist.

6. Dekorfliese nach Anspruch 5, **dadurch gekennzeichnet, dass** zumindest die weitere Dekorbedruckung (2) eingebrannt ist.

7. Dekorfliese nach einem der Ansprüche 1 bis 6, **dadurch gekennzeichnet, dass** hinter der Glasscheibenanordnung (7) zumindest eine weitere, mit der Glasscheibenanordnung (7) in Verbund gebrachte transparente Glasscheibenanordnung (8) mit zumindest rückseitiger Dekorbedruckung (3) angeordnet ist.

8. Dekorfliese nach einem der Ansprüche 1 bis 7, **dadurch gekennzeichnet, dass** die Dekorbedruckungen (2,3) aus in der Gestaltung identischen positiv- und/oder negativ-Bedruckungen bestehen.

9. Dekorfliese nach Anspruch 8, **dadurch gekennzeichnet, dass** die positiv- und /oder negativ-Bedruckungen dieselbe Lage aufweisen.

10. Dekorfliese nach einem der Ansprüche 1 bis 9, **gekennzeichnet durch** eine Verspiegelung der Fliesenrückseite.

11. Dekorfliese nach einem der Ansprüche 1 bis 10, **dadurch gekennzeichnet, dass** die Glasscheibenanordnung (1,7,8) aus einer Einzelscheibe oder mehreren hintereinander angeordneten und miteinander in Verbund gebrachten Einzelscheiben und/oder einer Verbundglasscheibe mit zumindest einer Verbundglasfolie besteht.

## Claims

1. Decorative tile for covering walls, floors and/or ceilings, **characterised by** a transparent glass-sheet arrangement (1, 7) forming the front face of the tile, on the rear face of which arrangement (1, 7) is arranged decorative printing (3), the glass-sheet arrangement (1, 7) being composed of float glass.

2. Decorative tile according to claim 1, **characterised in that** the glass-sheet arrangement (1, 7) is composed of float glass in the form of colourless glass.

3. Decorative tile according to claim 1 or 2, **characterised in that** the decorative printing (3) on the rear face of the glass-sheet arrangement (1, 7) is printed on.

4. Decorative tile according to either of claims 1 and 2, **characterised in that** the decorative printing (3) is printed on a glass-laminating film (5) which is united with the rear face of the glass-sheet arrangement (7).

5. Decorative tile according to one of claims 1 to 4, **characterised in that** the glass-sheet arrangement (1, 7) on the front face of the tile is partly printed with further decorative printing (2).

6. Decorative tile according to claim 5, **characterised in that** at least the further decorative printing (2) is baked on.

7. Decorative tile according to one of claims 1 to 6, **characterised in that** there is arranged behind the glass-sheet arrangement (7) at least one further transparent glass-sheet arrangement (8), which is united with the glass-sheet arrangement (7) and which has decorative printing (3) at least on the rear face.

8. Decorative tile according to one of claims 1 to 7, **characterised in that** the decorative printings (2, 3) comprise positive and/or negative printings of identical design.

9. Decorative tile according to claim 8, **characterised in that** positive and/or negative printings are in the same position.

10. Decorative tile according to one of claims 1 to 9, **characterised by** reflective coating of the rear face of the tile.

11. Decorative tile according to one of claims 1 to 10, **characterised in that** the glass-sheet arrangement (1, 7, 8) comprises a single sheet, or a plurality of single sheets which are arranged one behind the other and are united, and/or a sheet of laminated glass having at least one glass-laminating film.

## Revendications

1. Carreau décoratif pour le revêtement d'un plafond, d'un sol ou d'un mur, **caractérisé par** un agencement de plaques de verre transparente (1, 7) qui forme le côté avant du carreau et dont le côté arrière est doté d'un imprimé décoratif (3), l'agencement de plaques de verre (1, 7) étant du verre flotté.

2. Carreau décoratif selon la revendication 1, **caractérisé en ce que** l'agencement de plaques de verre (1, 7) est du verre flotté se présentant sous la forme de verre blanc.

3. Carreau décoratif selon la revendication 1 ou 2, **caractérisé en ce que** l'imprimé décoratif (3) est appliqué par pression sur le côté arrière de l'agencement de plaques de verre (1, 7).

4. Carreau décoratif selon la revendication 1 ou 2, **caractérisé en ce que** l'imprimé décoratif (3) est appliqué par pression sur une feuille de verre feuilleté (5) qui est liée au côté arrière de l'agencement de plaques de verre (7).

5. Carreau décoratif selon l'une des revendications 1 à 4, **caractérisé en ce que** l'agencement de plaques de verre (1, 7) est partiellement imprimé, du côté avant du carreau, avec un autre imprimé décoratif (2).

6. Carreau décoratif selon la revendication 5, **caractérisé en ce que** au moins l'autre imprimé décoratif (2) est recuit.

7. Carreau décoratif selon l'une des revendications 1 à 6, **caractérisé en ce que** en arrière de l'agencement de plaques de verre (7) est placé au moins un autre agencement de plaques de verre transparentes (8) lié à l'agencement de plaques de verre (7) et doté d'au moins un imprimé décoratif arrière (3).

8. Carreau décoratif selon l'une des revendications 1 à 7, **caractérisé en ce que** les imprimés décoratifs sont constitués par des imprimés en positif et/ou en négatif de conformation identique.

9. Carreau décoratif selon la revendication 8, **caractérisé en ce que** les imprimés en positif et/ou en négatif ont la même position.

10. Carreau décoratif selon l'une des revendications 1 à 9, **caractérisé en ce que** le côté arrière du carreau est doté d'une couche réfléchissante.

11. Carreau décoratif selon l'une des revendications 1 à 10, **caractérisé en ce que** l'agencement de plaques de verre (1, 7, 8) est constitué d'une plaque individuelle ou de plusieurs plaques individuelles placées les unes derrière les autres et reliées entre elles et/ou une plaque de verre feuilleté constituée d'au moins une feuille de verre feuilleté.
